# EUROPEAN PATENT SPECIFICATION

(11) **EP 3 046 422 B1**
(45) Date of publication and mention of the grant of the patent: **15.05.2019**
(21) Application number: 14787057.0
(22) Date of filing: 19.09.2014
(51) Int. Cl.: A23G 1/00, A23G 1/20, A23G 3/34

(54) **APPARATUS & METHOD FOR PRODUCING A MOLDED FOOD ITEM**
VORRICHTUNG UND VERFAHREN ZUR HERSTELLUNG EINES GEFORMTEN LEBENSMITTELS
DISPOSITIF & PROCÉDÉ POUR LA PRODUCTION D'UN ALIMENT MOULÉ

(30) Priority: 20.09.2013 GB 201316737
(43) Date of publication of application: 27.07.2016
(73) Proprietor: Kraft Foods R & D, Inc., Deerfield, IL 60015 (US)
(72) Inventor: WHITE, David, Birmingham West Midlands B30 2LU (GB); GUSTAV, Thorsten, Birmingham West Midlands B30 2LU (GB); ROCKLAGE, Bernard, 28199 Bremen (DE); SCHULZ, Michael, 28199 Bremen (DE)
(74) Representative: Appleyard Lees IP LLP
(86) International application number: PCT/IB2014/064668
(87) International publication number: WO 2015/040582

(56) References cited:
- EP-A1- 1 346 645
- WO-A1-01/78519
- WO-A1-2015/000037
- WO-A2-2006/086781
- DE-B- 1 071 464
- GB-A- 1 471 347

## Description

### Technical Field of the Invention

The invention relates to an apparatus and methods for producing a moulded food item.

### Background to the Invention

Current shell moulding methods for centre-filled confectionery products incorporate the step of 'backing off' the product by applying a layer of confectionery material (usually the same material as used to form the shell) which ultimately seals the product and forms its base. Such backing layers are typically 1-10mm thick.

Backing of chocolate products can be executed by overfilling the mould with a flowable chocolate mass to ensure that all voids are filled and the mass is evenly distributed by a scraping arrangement. In this process, any overfill is scraped from the mould and recycled in a reflow method. This procedure generates a constant mass reflow problem and the moulds are fouled with chocolate. Incorrect scraper operation can lead to mould abrasion (with the risk of scraping plastics debris into the chocolate), irreversible ddeformation of moulds and chocolate residue can cause mould jams. There is also the risk of entraining the centre fill material into the chocolate reflow which can result in downtime incurred for separation and inevitable loss of usable chocolate and this is a particular problem with low-viscosity centres which can easily be displaced by the backing layer. Scraping also increases the spoilage/taint by scraping chocolate/flavours from one line onto other lines. Recycling chocolate in the reflow process increases energy costs for re-tempering and re-processing.

Backing of chocolate products can also be executed by depositing the required amount of chocolate mass to the mould and distributing the mass evenly by vibrating the mould in an x/y movement. However, this method is not suited to manufacturing larger flat surfaces in thin layers (especially the rear of larger bars and tablets) and is current only used for smaller, concentrated surfaces like pralines.

The backing by vibration is not suitable for chocolate products having footprints with corners, as the mass has to be evenly distributed and is hampered by the distance from a deposing nozzle to the edges and corners.

Forming the chocolate shells can be achieved by a number of methods. Inversion is the most common method of forming chocolate shells, where liquid is over filled into the chocolate moulds and the moulds inverted so as to remove excess chocolate leaving the surface of the mould coated with chocolate and thus form the shell. Inversion can produce uneven and/or inconsistent shells. Cold stamping can also be employed, where a small quantity of liquid chocolate mass is placed in the mould and a cold stamp having slightly smaller but complementary dimensions to the interior surface of the mould is used to squeeze the chocolate up the sides of the mould at the same time as cooling the shell. Cold stamping can be expensive and usually requires part of the line to be temperature and humidity controlled. Displacement is another method, but requires tight density control so is open to inconsistency (also changes in viscosity may harm the product)

It is therefore an object of the present invention to alleviate one or more of the above problems with confectionery shell moulding manufacture. It is also an object of the present invention to provide for an improved apparatus and methods for forming the confectionery shells and/or backing layers of shell moulded confectionery items. It is also an object of the present invention to provide for a method and apparatus which could be suited for producing multicoloured chocolate and/or multi-flavour production on the same line.

DE 10 71 464 describes a system for forming a liquid centred shell moulded chocolate. The system makes use of a longitudinally moveable dispenser to address the problems associated with covering liquid filled chocolates.

WO 2006/086781 describes a method for forming thin edible pieces using two continuous belts that cooperate to form a fill cavity. An edible mass, such as chocolate, if flowed into the fill cavity where it forms an edible blank which is transported on a belt path with the two belts moving in tandem. After the edible blank is released from the first or second continuous belt, a three dimensional shape may be imparted to the edible blank using stamping dies or a forming drum.

GB 1 471 347 describes a depositor for viscous liquid confectionary mounted about a conveyer with a series of moulds. The depositor comprises a hopper with a plunger pump and an outlet valve composed of a plate movable with the hopper in the direction of the conveyer until it engages stops to open or close the valve.

EP 1 346 645 describes an apparatus for making chocolate covering layers. Plungers having pressing surfaces onto which no lubricant is applied are immersed into contact with tempered chocolate mass thereby being pressed into shape.

WO 01/78519 describes a confectionary-based product comprising a moulded shell and a substantially planar closure base portion securely sealed onto the edges of the shell. The sealed assembly formed by the shell and the closure base portion delimited an inner cavity, wherein the inner cavity is partially occupied with a mass formed of solid edible discrete pieces.

### Summary of the Invention

In accordance with a first aspect of the present invention, there is provided an apparatus for producing a moulded food item comprising:
a) a depositor for depositing a flowable food mass to one or more moulds, wherein a mould has an opening of pre-determined dimensions; and
b) a restriction element forming one or more apertures which restrict the flow of the food mass from the depositor to substantially the same dimensions as the mould opening.

The restriction element comprises a plurality of apertures to restrict the flow of the food mass to a plurality of moulds. The apparatus according to the invention has an arrangement so as to enable the aperture of the restriction element to be in registration with and located adjacently to the mould opening so as to allow fluid communication of the flowable food mass from the depositor through the restriction element to the mould.

The apparatus according to the invention has an arrangement so as to enable the aperture of the restriction element to be brought into registration with the mould opening as the mould passes underneath.

The restriction element according to the invention comprises a cylinder with a plurality of apertures capable of being in rotatable registration with a plurality of mould openings. In an alternative embodiment not forming part of the invention the restriction element may comprise a substantially planar stencil with a plurality of apertures capable of being placed in registration with a plurality of mould openings. The apparatus may include a plurality of planar stencils which are brought into contact with a plurality of moulds.

The depositor may comprise a spray or curtain nozzle. Preferably the depositor is capable of supplying a continuous and consistent supply of the flowable food mass when a mould is placed underneath.

The flowable food mass may be deposited to a mould to form a continuous layer of the food mass so as to form the shell and/or base of the moulded product. The apparatus may further comprise a centre fill depositor for depositing a centre fill material in the shell of the moulded food item. The apparatus can be used to not only form the shell, but after the centre-fill material has been deposited it can also be used to form the base. The same flowable food mass depositor and restriction element can be used to form the shell and the base - or different depositors and restriction elements used to form the shell and base. Furthermore, different types of depositors could be employed in the apparatus. For example a spray depositor could be used to form the shell, whereas a curtain depositor could be used to form the base.

It will be apparent that the apparatus is suited to produce a wide variety of moulded foods items. In particular, the flowable food mass comprises a chocolate or chocolate coating material. The apparatus may be used for shell moulding centre filled chocolate type products. The apparatus may be used for applying a continuous back layer of chocolate or coating material to a filled chocolate shell. The term "continuous back layer" in the scope of the present invention is intended to mean that it substantially covers and seals off the chocolate shell moulded product.

In accordance with a further aspect of the present invention, there is provided a method for producing a moulded food item comprising:
a) depositing a flowable food mass to one or more moulds, wherein a mould has an opening of pre-determined dimensions; and
b) restricting the flow of the food mass from the depositor to the mould by means of a restriction element having one or more apertures having substantially the same dimensions as the mould opening.

The flow of the food mass is restricted by means of a plurality of apertures to restrict the flow to a plurality of mould openings. The apertures of the restriction elements are kept in registration with and located adjacently to the mould opening so as to allow fluid communication of the flowable food mass from the depositor through the restriction element to the mould. It is preferred that the restriction elements will be in direct physical communication with the surface of the moulds so as to prevent any flow of the food mass past the mould openings - in this way, the communication of the surfaces acts to seal one another so as to prevent unwanted seepage or leakage outside of the mould opening. The apertures of the restriction element will also be brought into registration with the mould opening as the mould passes underneath.

The restriction element comprises a cylinder with a plurality of apertures which is rotated in registration with a plurality of mould openings passing underneath. In an alternative method not being part of the invention the restriction element may comprise a substantially planar stencil with a plurality of apertures capable of being brought into registration with a plurality of mould openings.

The flowable food mass may be deposited by spraying and/or forming a curtain of the mass.

The flowable food mass may be deposited to a mould so as to form a continuous layer of the food mass on an inner surface of the mould so as to form the shell and/or the base of the moulded product.

Steps a) and b) of the method may be used to form the shell of the moulded confectionery food item and the method may further comprises the steps:
c) depositing a centre fill material to the shell formed in steps a) and b), said centre fill material being different to the flowable food mass; and
d) further depositing more of the flowable food mass to one or more moulds and restricting the flow of the food mass from the depositor to the mould by means of a restriction element having one or more apertures having substantially the same dimensions as the mould opening so as to form a backing layer of the moulded confectionery item. The method may employ different depositing methods (spray and curtain) for the formation of the shell and the backing layer or may utilise the same depositing methods.

The flowable food mass preferably comprises a chocolate or chocolate coating material. Preferably, the method is utilised for producing shell moulded centre filled chocolate type products and a continuous back layer of chocolate or chocolate coating material is applied to the rear of the chocolate shell.

In a further aspect of the present invention, there is provided a shell-moulded chocolate product produced on a apparatus and/or using the method as herein above described.

Such a shell-moulded chocolate product may comprise a centre-fill material which is a confectionery material. A number of confectionery centre-fill materials will be apparent to the skilled addressee. In certain embodiments, the centre-fill material is a fat-based centre-fill material or a water-based centre-fill material. Suitable fat-based centre-fill materials include truffle, mousse, and chocolate. Suitable water-based centre-fill materials include caramel, fondant creme and gels such as Turkish delight. In one embodiment the centre-fill material is a liquid or flowable material at room temperature. For example, the centre-fill material may be a viscous liquid, such as a caramel, a fondant creme or a gel, such as Turkish delight. The centre- fill material may be aerated, for example, a mousse. The centre-fill material has a different composition from the chocolate shell material so that the centre-fill is distinguishable from the chocolate shell.

In one embodiment, the chocolate shell material is a milk chocolate and the centre-fill material is a white chocolate. The chocolate shell material and/or the centre-fill material may comprise various additions such as colourings, flavourings and small solid inclusions. Suitable solid inclusions will be apparent to the skilled addressee and will, amongst other things, include nut pieces, cereal pieces and popping candy. It will be understood that such inclusions will be deposited together with the chocolate shell material and/or centre-fill material and so must be suitably sized otherwise the apparatus would become clogged.

The term 'chocolate' in the context of the present invention is not restricted by the various definitions of chocolate provided by government and regulatory bodies. A chocolate shell material is simply a product that contains a fat phase and which is obtained from cocoa products and sweeteners.

The chocolate shell material may be a dark chocolate, a milk chocolate or a white chocolate. The chocolate shell material comprises at least one fat. The fat may be cocoa butter, butterfat, a cocoa butter equivalent (CBE), a cocoa butter substitute (CBS), a vegetable fat that is liquid at standard ambient temperature and pressure or any combination of the above. In a particular embodiment, the chocolate shell material comprises cocoa butter.

CBEs are defined in Directive 2000/36/EC. Suitable CBEs include illipe, Borneo tallow, tengkawang, palm oil, sal, shea, kokum gurgi and mango kernel. CBEs are usually used in combination with cocoa butter. In one embodiment, the chocolate shell material comprises no more than 5wt% CBEs.

The chocolate shell material may comprise a cocoa butter substitute (CBS) (sometimes known as a cocoa butter replacer, CBR) in place of some or all of the cocoa butter. Such chocolate materials are sometimes known as compound chocolate. Suitable CBS's include CBS laurics and CBS non-laurics. CBS laurics are short-chain fatty acid glycerides. Their physical properties vary but they all have triglyceride configurations that make them compatible with cocoa butter. Suitable CBS's include those based on palm kernel oil and coconut oil. CBS non-laurics consist of fractions obtained from hydrogenated oils. The oils are selectively hydrogenated with the formation of trans acids, which increases the solid phase of the fat. Suitable sources for CBS nonlaurics include soya, cottonseed, peanut, rapeseed and corn (maize) oil.

The chocolate shell material may comprise at least one vegetable fat that is liquid at standard ambient temperature and pressure. Suitable vegetable fats include corn oil, cotton seed oil, rapeseed oil, palm oil, safflower oil, and sunflower oil.

The present invention is further applicable to chocolate shell materials in which some or all of the fat is constituted by a partly or wholly non-metabolisable fat, for example Caprenin. The product may comprise one or more centre-fill materials. In an embodiment where the product has more than one centre-fill material, the centre-fill materials may be arranged inside one another or layered on top of one another or located side-by-side. The chocolate shell may comprise more than one chocolate shell material. In one embodiment, the chocolate shell comprises two chocolate shell materials with different appearances. For example, the chocolate shell may comprise both milk chocolate and white chocolate in a swirled pattern.

The apparatus and method of the present invention provides a number of advantages. For example, accurate dosing of the back layer which is better suited to the manufacture of products with larger back surfaces. This enables a mess- and scraping- free bottoming of those products. Thus production line space, mould cleaning and mould renewal can be significantly minimized.

The use of a restriction element and a spray provides for moulded confectionery products to be easily formed - whether spraying a backing layer onto a filled moulded chocolate shell and/or producing the shell itself and can also be used to provide a decorative effect by blending or using sprays of different colours or confectionery materials.

If a plurality of stencils are employed, they may be transported around the production line by means of rotating stacking system, although they could also be attached to a belt or similar conveyance system and be held upside-down for part of the transport cycle. In order to clean a stencil, a licking roller can be employed for removing excess chocolate from a stencil - although other methods such as gas (e.g. hot air), liquid (e.g. water or a solvent), suction, scrapers and brushes could also be employed or a number of methods combined. As alternative, disposable stencils could be employed.

### Detailed Description of the Invention

Embodiments of the present invention will now be described, by way of example only, with reference to the accompanying figures, in which:
Fig. 1 is a schematic diagram of the overall process of the present invention;
Fig. 2 show elements of a cylinder stencil which has rectangular apertures;
Fig. 3 is a picture of part of a cylinder stencil which has circular apertures;
Fig. 4A is diagram of a cylinder stencil as shown in Fig. 3 on a moulding line;
Fig. 4B is a cut-through view of the cylinder stencil and moulding line as shown in Fig. 3;
Fig. 5 is a schematic flow diagram of the process employed using a planar stencil; and
Fig. 6 is a schematic diagram of the process not according to the invention, employed using a planar stencil on a moulding line.

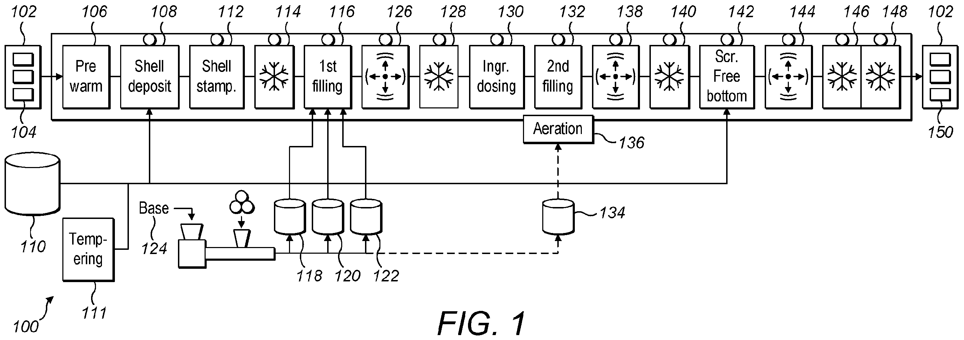

With reference to Figure 1, there is shown a schematic diagram of the overall process 100 of the present invention. The overall process 100 starts with a mould 102 having a number of mould cavities 104 which is initially pre-warmed in a warming station 106 prior to passing under a shell depositor 108 which is fed from a supply of liquid chocolate 110 which has previously been tempered by a tempering station 111. After the chocolate has been deposited into the mould cavities 104, the mould passes under a shell forming station 112 and the stamped shell cooled via a first cooling station 114. The shell formin station 112 may comprise a cold stamp arrangement if desired.

The chocolate shells then pass through a first filling station 116 where a filling is dispensed into the chocolate shell. The first filling station 116 is fed from a line which deposits a base material 124 that is subsequently blended with a first filling ingredient 118, a second filling ingredient 120 and a third filling ingredient 122. After the chocolate shell has been filled with the first filling, it then passes through a first vibrating station 126 so as to settle the filling prior to it being passed through a second cooling station 128. An ingredient dosing device 130 checks that the correct amount of first filling material has been deposited into the chocolate shell and then the chocolate shell is passed under a second filling station 132 where a supply of a second filling material 134 is deposited via an aeration station 136. The chocolate shells are then passed through a second vibrating station 138 and a third cooling station 140 before proceeding to a backing layer station 142. In the schematic diagram shown in Figure 1, the backing layer station 142 would employ either a rotating cylinder or planar stencil arrangement as described with reference to the two embodiments later described.

After the backing layer has been applied to the chocolate moulded shells, they are subjected to a third vibrating station 144 and a fourth and fifth cooling station 146, 148 prior to the moulds 102 being rejected from the process with their cavities 104 being filled with a finished shell-moulded centre-filled chocolate product 150.

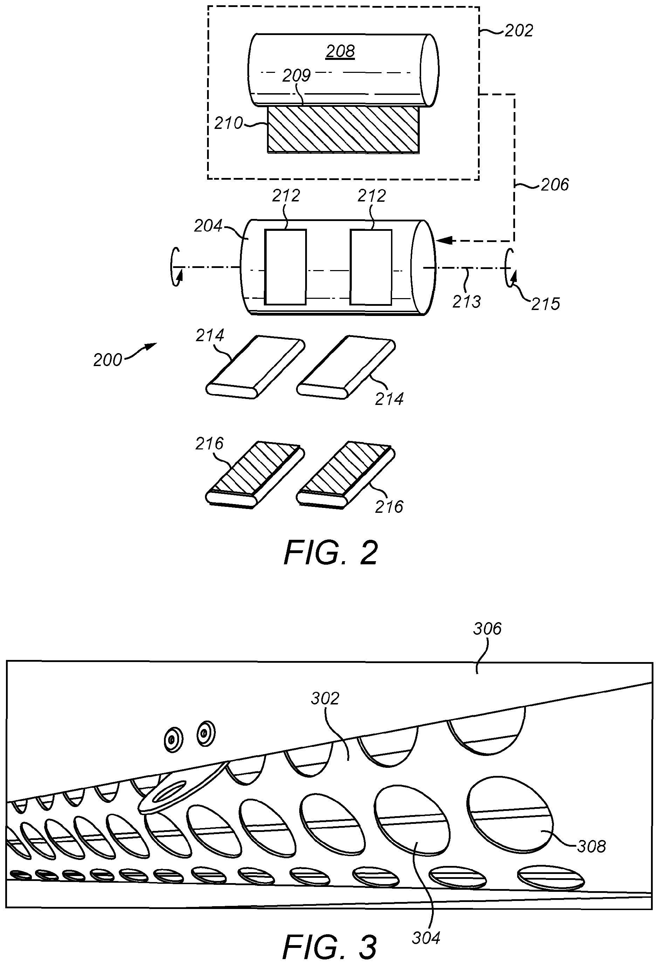

Turning to Figure 2, the basic elements of the rotating cylinder embodiment 200 for applying a backing layer to shell-moulded chocolate products is shown. A chocolate dispenser 202 is formed of a tank 208 with an elongated dispensing nozzle 209, through which a curtain of liquid chocolate 210 is dispensed.

The chocolate dispenser 202 is located within the cylindrical stencil 204 as indicated by dotted line 206. The cylindrical stencil 204 has two rectangular apertures 212 and is rotatable along the longitudinal axis denoted by line 213 in direction 215. Two rectangular shell-moulded chocolate products 214 are passed in registration with the apertures 212 and when they pass under the apertures 212, the curtain of chocolate 210 is deposited onto the backs of the shell-moulded chocolates 214 so as to form a backing layer 216. As the apertures 212 correspond to the shape and location of the chocolate shell-moulded products 214, only a chocolate coating of a pre-determined dimension from the chocolate curtain 210 coats the backs of the chocolate shell-moulded products 214 and no additional chocolate material is deposited on or around the edges of the products.

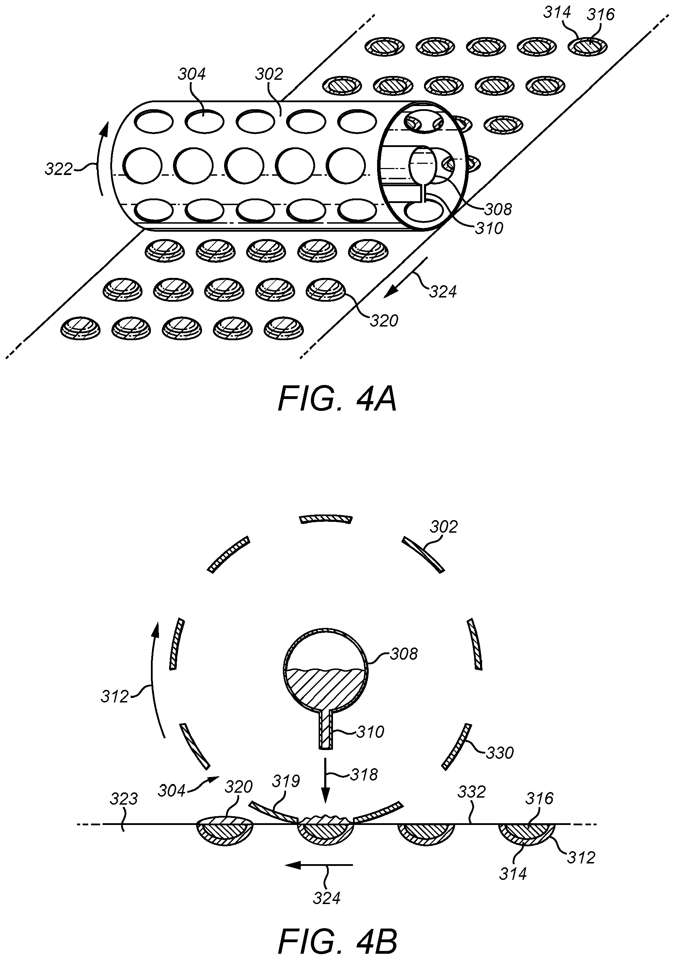

With reference to Figures 3-4B, there is shown a similar arrangement as shown in Figure 2, but shows a cylindrical stencil 302 has a number of round apertures 304 as opposed to rectangular apertures 212. The device has a chocolate dispenser 308 and an elongated nozzle 310 through which a curtain of chocolate 318 is dispensed to the inner surface 319 of the cylindrical stencil 302. The cylindrical stencil 302 rotates in a clockwise direction indicated by arrow 322, whilst a continuous mould bed 323 passes underneath. The mould bed 323 has a number of cavities 312 in which the initial components of a centre-filled shell-moulded chocolate product have already been formed. The mould cavity 312 has an outer surface upon which a chocolate shell 314 has been formed and a centre-fill 316 has already been deposited.

When in use, the cylindrical stencil 302 rotates clockwise as indicated by arrow 322 and the mould bed 323 moves in a contra-direction relative to the rotation of the cylindrical stencil 302 and the circular apertures 304 are aligned with the circular edges of the mould cavities 312. The outer surface 330 of the cylindrical stencil 302 will abut intervening areas 332 of the mould bed so as to form a seal and prevent any liquid chocolate from over-spilling or not being accurately deposited over only the back of the chocolate shell-moulded product. After the mould cavity 312 has passed under the chocolate curtain 318 it has a backing layer 320 of chocolate and no additional chocolate is dispensed in to any intervening areas 332 of the mould bed 323 in between respective cavities 312. If desired, a pump (not shown) can be used to re-circulate any liquid chocolate which accumulates towards the bottom of the cylindrical stencil into the chocolate dispenser 308.

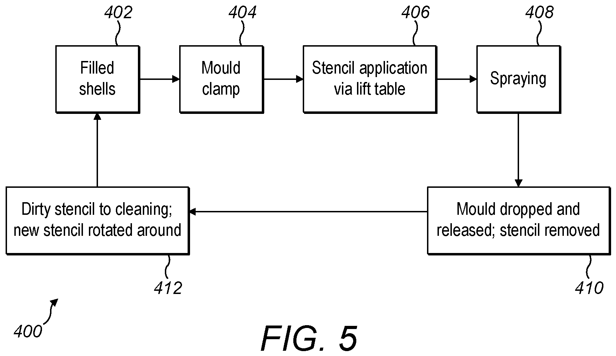

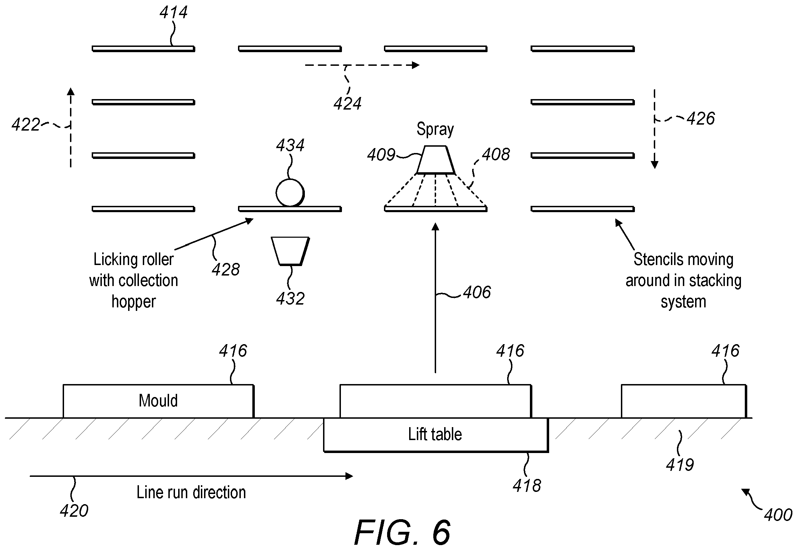

Turning to Figures 5 and 6, there is illustrated a schematic method 400 of applying a backing layer to a chocolate shell-moulded product using a planar stencil 414. Figure 5 shows the general overall method 400 starting with chocolate filled shells 402 which are progressed to a mould clamp 404 which holds the mould in place whilst a stencil is applied over the mould being lifted via a lift table 406. The chocolate backing layer is then sprayed 408 and the mould dropped and released and stencil removed 410 and ultimately the dirty stencil is cleaned and a new stencil rotated around 412 so as to be ready for the next filled shells.

Figure 6 shows that a plurality of planar stencils 414 are used in rotation. The mould (which may have multiple cavities - not shown) 416 are moved along the conveying line in the direction 420 and successively clamped in place on a lift table 418 and lifted up towards a stencil 414. Liquid chocolate is then sprayed 408 from a nozzle 409 to place a backing layer of chocolate on to the back of the shell-moulded product and the mould 416 ascends to the conveying line and is moved along so that the next mould can be lifted in place so that the stencil and chocolate spray. Used stencils 414 are moved away after being used and can be cleaned. A licking roller 434 and collection hopper 432 can be used in order to remove any excess chocolate prior to the stencil 414 being placed under the spray nozzle 409. As the planar stencil 414 has a number of apertures (not shown) which correspond to the dimensions of the mould cavities in the moulds 416, no excess liquid chocolate is sprayed from the spray nozzle 409 around intervening areas between the cavities and therefore there is no excess chocolate needs to be removed from the around the mould cavities.

Whilst not explicitly stated, with reference to the figures, the dispensers and stencils can also be utilised to form the chocolate shell in addition to the backing layer and may form a separate shell forming station on the line, or the moulds pass the dispenser and stencils arrangements twice for the formation of the chocolate shell and the backing layer.

The forgoing embodiments are not intended to limit the scope of the protection afforded by the claims, but rather to describe examples of how the invention may be put into practice.

## Claims

1. An apparatus for producing a moulded food item comprising:
a) a depositor (202, 308) for depositing a flowable food mass to one or more moulds (323), wherein a mould (323) has an opening (312) of pre-determined dimensions; and
b) a restriction element (204, 302) forming one or more apertures (212, 304) which restrict the flow of the food mass from the depositor (202, 308) to substantially the same dimensions as the mould opening (312),
wherein the aperture (212, 304) of the restriction element (204, 302) is capable of being in registration with and located adjacently to the mould opening (312) so as to allow fluid communication of the flowable food mass from the depositor (202, 308) through the restriction element (204, 302) to the mould (323), the aperture (212, 304) of the restriction element (204, 302) being configured so that it can be brought into registration with the mould opening (312) as the mould (323) passes underneath, and wherein the restriction element (204, 302) comprises a cylinder with one or more apertures (212, 304) capable of being in rotatable registration with one or more mould openings (312).

2. An apparatus as claimed in claim 1, wherein the restriction element (204, 302) comprises a plurality of apertures (212, 304) and the mould (323) comprises a plurality of openings (312).

3. An apparatus as claimed in any preceding claim, wherein the depositor (202, 308) comprises a spray or curtain nozzle (209, 310).

4. An apparatus as claimed in any preceding claim, wherein the flowable food mass deposited to a mould (323) forms a continuous layer of the food mass so as to form the shell and/or base of the moulded product.

5. An apparatus as claimed in claim 4, wherein the apparatus comprises a centre fill depositor for depositing a centre fill material in the shell of the moulded food item.

6. An apparatus as claimed in any preceding claim, wherein the flowable food mass comprises a chocolate or chocolate coating material.

7. An apparatus as claimed in claim 6, for use in shell moulding centre filled chocolate type products.

8. An apparatus as claimed in claim 6, wherein the apparatus is used for applying a continuous back layer of chocolate or chocolate coating material to a chocolate shell.

9. A method for producing a moulded food item comprising:
a) depositing a flowable food mass to one or more moulds (323), wherein a mould (323) has an opening (312) of pre-determined dimensions; and
b) restricting the flow of the food mass from the depositor (202, 308) to the mould (323) by means of a restriction element (204, 302) having one or more apertures (212, 304) having substantially the same dimensions as the mould opening (312),
wherein the one or more apertures (212, 304) of the restriction elements (204, 302) are kept in registration with and located adjacently to the one or more mould opening (312) so as to allow fluid communication of the flowable food mass from the depositor (202, 308) through the restriction element (204, 302) to the mould (323), an aperture (212, 304) of the restriction element (204, 302) being brought into registration with the mould opening (312) as the mould (323) is passed underneath, and wherein the restriction element (204, 302) comprises a cylinder with one or more apertures (212, 304) which is rotated in registration with one or more moulds openings (312) passing underneath.

10. A method as claimed in claim 9, wherein the flow of the food mass is restricted by means of a plurality of apertures (212, 304) to restrict the flow to a plurality of mould openings (312).

11. A method as claimed in claim 9 or 10, wherein the flowable food mass is deposited by spraying and/or forming a curtain.

12. A method as claimed in any one of claims 9 to 11, wherein the flowable food mass deposited to a mould (323) so as to form a continuous layer of the food mass on an inner surface of the mould so as to form the shell and/or the base of the moulded product.

13. A method as claimed in claim 12, wherein steps a) and b) of the method forms the shell of the moulded confectionery food item and the method further comprises the steps:
c) depositing a centre fill material to the shell formed in steps a) and b), said centre fill material being different to the flowable food mass; and
d) further depositing more of the flowable food mass to one or more moulds and restricting the flow of the food mass from the depositor (202, 308) to the mould (323) by means of a restriction element (204, 302) having one or more apertures (212, 304) having substantially the same dimensions as the mould opening (312) so as to form a backing layer of the moulded confectionery item.

14. A method as claimed in any one of claims 9 to 13, wherein the flowable food mass comprises a chocolate or chocolate coating material.

15. A method as claimed in claim 14, wherein the method is for producing shell moulded centre filled chocolate type products.

16. A method as claimed in claim 15, wherein a continuous back layer of chocolate or chocolate coating material is applied to the rear of the chocolate shell.

17. A shell-moulded chocolate product produced on an apparatus as claimed in any one of claims 1 to 8 and/or using the method as claimed in any one of claims 9 to 16.

## Patentansprüche

1. Vorrichtung zur Herstellung eines geformten Nahrungsmittels, umfassend:
a) eine Auftragevorrichtung (202, 308) zum Auftragen einer fließfähigen Nahrungsmittelmasse auf eine oder mehrere Formen (323), wobei eine Form (323) eine Öffnung (312) mit vorgegebenen Abmessungen aufweist; und
b) ein Beschränkungselement (204, 302), das eine oder mehrere Öffnungen (212, 304) bildet, die den Fluss der Nahrungsmittelmasse aus der Auftragevorrichtung (202, 308) auf im Wesentlichen dieselben Abmessungen wie die Formöffnung (312) beschränkt,
wobei die Öffnung (212, 304) des Beschränkungselements (204, 302) imstande ist, passgenau mit und neben der Formöffnung (312) angeordnet zu werden, sodass sie die Fluidkommunikation der fließfähigen Nahrungsmittelmasse von der Auftragevorrichtung (202, 308) durch das Beschränkungselement (204, 302) zur Form (323) zulässt, wobei die Öffnung (212, 304) des Beschränkungselements (204, 302) so ausgelegt ist, dass sie passgenau mit der Formöffnung (312) gemacht werden kann, wenn die Form (323) darunter vorbeigeht, und wobei das Beschränkungselement (204, 302) einen Zylinder mit einer oder mehreren Öffnungen (212, 304) umfasst, die imstande sind, rotierbar passgenau mit einer oder mehreren Formöffnungen (312) zu sein.

2. Vorrichtung nach Anspruch 1, wobei das Beschränkungselement (204, 302) mehrere Öffnungen (212, 304) umfasst und die Form (323) mehrere Öffnungen (312) umfasst.

3. Vorrichtung nach einem vorstehenden Anspruch, wobei die Auftragevorrichtung (202, 308) eine Sprüh- oder Vorhangdüse (209, 310) umfasst.

4. Vorrichtung nach einem vorstehenden Anspruch, wobei die fließfähige Nahrungsmittelmasse, die auf eine Form (323) aufgetragen wird, eine kontinuierliche Schicht der Nahrungsmittelmasse bildet, um die Hülle und/oder Basis des geformten Produkts zu bilden.

5. Vorrichtung nach Anspruch 4, wobei die Vorrichtung eine Mitten-Füllungsauftragevorrichtung zum Auftragen eines Mitten-Füllungsmaterials der Hülle des geformten Lebensmittels umfasst.

6. Vorrichtung nach einem vorstehenden Anspruch, wobei die fließfähige Nahrungsmittelmasse ein Schokoladen- oder Schokoladenbeschichtungsmaterial umfasst.

7. Vorrichtung nach Anspruch 6 zur Anwendung bei hüllengeformten, in der Mitte gefüllten Schokoladentypprodukten.

8. Vorrichtung nach Anspruch 6, wobei die Vorrichtung angewandt wird, um eine kontinuierliche Rückschicht von Schokoladen- oder Schokoladenbeschichtungsmaterial auf eine Schokoladenhülle aufzutragen.

9. Verfahren zur Herstellung eines geformten Nahrungsmittels, umfassend:
a) Auftragen einer fließfähigen Nahrungsmittelmasse auf eine oder mehrere Formen (323), wobei eine Form (323) eine Öffnung (312) von vorgegebenen Abmessungen aufweist; und
b) Beschränken des Flusses der Nahrungsmittelmasse von der Auftragevorrichtung (202, 308) auf die Form (323) mithilfe eines Beschränkungselements (204, 302), das eine oder mehrere Öffnungen (212, 304) hat, die im Wesentlichen dieselben Abmessungen wie die Formöffnung (312) aufweisen,
wobei die eine oder mehreren Öffnungen (212, 304) der Beschränkungselemente (204, 302) passgenau mit und neben der einen oder den mehreren Formöffnungen (312) angeordnet gehalten werden, um die Fluidkommunikation der fließfähigen Nahrungsmittelmasse von der Auftragevorrichtung (202, 308) durch das Beschränkungselement (204, 302) zur Form (323) zuzulassen, wobei eine Öffnung (212, 304) des Beschränkungselements (204, 302) passgenau mit der Formöffnung (312) gemacht wird, wenn die Form (323) darunter vorbeigeführt wird, und wobei das Beschränkungselement (204, 302) einen Zylinder mit einer oder mehreren Öffnungen (212, 304) umfasst, der passgenau mit einer oder mehreren Formöffnungen (312), die darunter vorbeigehen, rotiert wird.

10. Verfahren nach Anspruch 9, wobei der Fluss der Nahrungsmittelmasse mithilfe von mehreren Öffnungen (212, 304) beschränkt wird, um den Fluss zu mehreren Formöffnungen (312) zu beschränken.

11. Verfahren nach Anspruch 9 oder 10, wobei die fließfähige Nahrungsmittelmasse durch Sprühen und/oder Bilden eines Vorhangs aufgetragen wird.

12. Verfahren nach einem der Ansprüche 9 bis 11, wobei die fließfähige Nahrungsmittelmasse auf eine Form (323) aufgetragen wird, um eine kontinuierliche Schicht der Nahrungsmittelmasse auf einer Innenfläche der Form zu bilden, um die Hülle und/oder die Basis des geformten Produkts zu bilden.

13. Verfahren nach Anspruch 12, wobei Schritte a) und b) des Verfahrens die Hülle des geformten Konfektnahrungsmittels bilden, und das Verfahren weiter die folgenden Schritte umfasst:
c) Auftragen eines Mitten-Füllungsmaterials auf die in Schritt a) und b) geformte Hülle, wobei das Mitten-Füllungsmaterial von der fließfähigen Nahrungsmittelmasse verschieden ist; und
d) ferner Auftragen einer weiteren Menge der fließfähigen Nahrungsmittelmasse auf eine oder mehrere Formen und Beschränken des Flusses der Nahrungsmittelmasse von der Auftragevorrichtung (202, 308) zur Form (323) mithilfe eines Beschränkungselements (204, 302), das eine oder mehrere Öffnungen (212, 304) hat, die im Wesentlichen dieselben Abmessungen aufweisen wie die Formöffnung (312), sodass sie eine Rückschicht des geformten Konfekts bildet.

14. Verfahren nach einem der Ansprüche 9 bis 13, wobei die fließfähige Nahrungsmittelmasse ein Schokoladen- oder Schokoladenbeschichtungsmaterial umfasst.

15. Verfahren nach Anspruch 14, wobei das Verfahren der Herstellung von hüllengeformten, in der Mitte gefüllten Schokoladentypprodukten dient.

16. Verfahren nach Anspruch 15, wobei eine kontinuierliche Rückschicht von Schokoladen- oder Schokoladenbeschichtungsmaterial auf die Rückseite der Schokoladenhülle aufgetragen wird.

17. Hüllengeformtes Schokoladenprodukt, das auf einer Vorrichtung nach einem der Ansprüche 1 bis 8 und/oder unter Anwendung des Verfahrens nach einem der Ansprüche 9 bis 16 hergestellt wird.

## Revendications

1. Appareil destiné à produire un aliment moulé comprenant :
a) un élément de dépôt (202, 308) destiné à déposer une masse alimentaire coulante sur un ou plusieurs moules (323), un moule (323) possédant une ouverture (312) de dimensions prédéfinies ; et
b) un élément de restriction (204, 302) formant un ou plusieurs orifices (212, 304) qui limitent l'écoulement de la masse alimentaire depuis l'élément de dépôt (202, 308) sensiblement aux mêmes dimensions que l'ouverture de moule (312),
l'orifice (212, 304) de l'élément de restriction (204, 302) étant susceptible d'être en alignement avec l'ouverture de moule (312) et situé à proximité de celle-ci, de manière à permettre une communication fluide de la masse alimentaire coulante entre l'élément de dépôt (202, 308) et le moule (323) par l'intermédiaire de l'élément de restriction (204, 302), l'orifice (212, 304) de l'élément de restriction (204, 302) étant configuré de manière à pouvoir être aligné avec l'ouverture de moule (312) à mesure que le moule (323) passe en dessous, et l'élément de restriction (204, 302) comprenant un cylindre avec un ou plusieurs orifices (212, 304) pouvant être en alignement rotatif avec une ou plusieurs ouvertures de moule (312).

2. Appareil selon la revendication 1, dans lequel l'élément de restriction (204, 302) comprend plusieurs orifices (212, 304) et le moule (323) comprend plusieurs ouvertures (312).

3. Appareil selon l'une quelconque des revendications précédentes, dans lequel l'élément de dépôt (202, 308) comprend une buse de pulvérisation ou à rideau (209, 310) .

4. Appareil selon l'une quelconque des revendications précédentes, dans lequel la masse alimentaire coulante déposée dans un moule (323) forme une couche continue de la masse alimentaire de manière à former la coquille et/ou la base du produit moulé.

5. Appareil selon la revendication 4, dans lequel l'appareil comprend un élément de dépôt d'un matériau de fourrage central pour déposer un matériau de fourrage central dans la coquille du produit alimentaire moulé.

6. Appareil selon l'une quelconque des revendications précédentes, dans lequel la masse alimentaire coulante comprend un chocolat ou un matériau d'enrobage de chocolat.

7. Appareil selon la revendication 6, destiné à être utilisé dans des produits de type chocolat fourrés, moulés en coquille.

8. Appareil selon la revendication 6, dans lequel l'appareil est utilisé pour appliquer une couche arrière continue de chocolat ou de matériau d'enrobage de chocolat sur une coquille de chocolat.

9. Procédé de production d'un produit alimentaire moulé consistant à :
a) déposer une masse alimentaire coulante dans un ou plusieurs moules (323), un moule (323) possédant une ouverture (312) de dimensions prédéfinies ; et
b) restreindre l'écoulement de la masse alimentaire depuis l'élément de dépôt (202, 308) vers le moule (323) au moyen d'un élément de restriction (204, 302) ayant un ou plusieurs orifices (212, 304) ayant sensiblement les mêmes dimensions que l'ouverture de moule (312),
les un ou plusieurs orifices (212, 304) des éléments de restriction (204, 302) étant maintenus en alignement avec les une ou plusieurs ouvertures de moule (312) et situés adjacents à celle(s)-ci, de façon à permettre une communication fluide de la masse alimentaire coulante entre l'élément de dépôt (202, 308) et le moule (323) par l'intermédiaire de l'élément de restriction (204, 302), un orifice (212, 304) de l'élément de restriction (204, 302) étant mis en alignement avec l'ouverture de moule (312) à mesure que le moule (323) passe en dessous, et l'élément de restriction (204, 302) comprenant un cylindre avec un ou plusieurs orifices (212, 304) qui est tourné en alignement avec une ou plusieurs ouvertures de moule (312) passant au-dessous.

10. Procédé selon la revendication 9, dans lequel l'écoulement de la masse alimentaire est limité au moyen d'une pluralité d'orifices (212, 304) pour limiter l'écoulement à une pluralité d'ouvertures de moule (312).

11. Procédé selon la revendication 9 ou 10, dans lequel la masse alimentaire coulante est déposée par pulvérisation et/ou formation d'un rideau.

12. Procédé selon l'une quelconque des revendications 9 à 11, dans lequel la masse alimentaire coulante est déposée dans un moule (323) de manière à former une couche continue de la masse alimentaire sur une surface interne du moule de manière à former la coquille et/ou la base du produit moulé.

13. Procédé selon la revendication 12, les étapes a) et b) du procédé formant la coquille du produit alimentaire de confiserie moulé et le procédé comprenant en outre les étapes consistant à :
c) déposer un matériau de fourrage central sur la coquille formée dans les étapes a) et b), ledit matériau de fourrage central étant différent de la masse alimentaire coulante ; et
d) déposer en outre une plus grande quantité de la masse alimentaire coulante dans un ou plusieurs moules et limiter l'écoulement de la masse alimentaire depuis l'élément de dépôt (202, 308) vers le moule (323) au moyen d'un élément de restriction (204, 302) ayant un ou plusieurs orifices (212, 304) ayant sensiblement les mêmes dimensions que l'ouverture (312) du moule de manière à former une couche de support du produit de confiserie moulé.

14. Procédé selon l'une quelconque des revendications 9 à 13, dans lequel la masse alimentaire coulante comprend un chocolat ou un matériau d'enrobage de chocolat.

15. Procédé selon la revendication 14, dans lequel le procédé est destiné à la fabrication de produits de type chocolat fourrés, moulés en coquille.

16. Procédé selon la revendication 15, dans lequel une couche arrière continue de chocolat ou de matériau d'enrobage de chocolat est appliquée à l'arrière de la coquille de chocolat.

17. Produit de chocolat moulé en coquille fabriqué sur un appareil selon l'une quelconque des revendications 1 à 8 et/ou en utilisant le procédé selon l'une quelconque des revendications 9 à 16.
